# EUROPÄISCHE PATENTSCHRIFT

(11) **EP 4 337 495 B1**
(45) Veröffentlichungstag und Bekanntmachung des Hinweises auf die Patenterteilung: **22.10.2025**
(21) Anmeldenummer: 22725787.0
(22) Anmeldetag: 26.04.2022
(51) Int. Cl.: B60Q 3/217, B60Q 3/64, B60Q 3/74, B60Q 3/78, B60Q 3/54

(54) **BELEUCHTUNGSVORRICHTUNG FÜR DEN INNENRAUM EINES KRAFTFAHRZEUGS**
LIGHTING DEVICE FOR THE INTERIOR OF A MOTOR VEHICLE
DISPOSITIF D'ÉCLAIRAGE POUR L'INTÉRIEUR D'UN VÉHICULE AUTOMOBILE

(30) Priorität: 12.05.2021 DE 102021204889
(43) Veröffentlichungstag der Anmeldung: 20.03.2024
(73) Patentinhaber: VOLKSWAGEN AKTIENGESELLSCHAFT, 38440 Wolfsburg (DE)
(72) Erfinder: ZANDER, Klaus, 39393 Hötensleben (DE); ZAJONZ, Alexandra, 38165 Lehre (DE); PREOBRASCHENSKI, Alexej, 38442 Wolfsburg (DE)
(86) Internationale Anmeldenummer: PCT/EP2022/061051
(87) Internationale Veröffentlichungsnummer: WO 2022/238111

(56) Entgegenhaltungen:
- EP-A1- 2 258 976
- EP-A1- 3 663 641
- EP-A2- 1 992 870
- DE-A1- 102016 220 069
- DE-A1- 102016 225 413
- FR-A1- 3 056 537
- FR-A1- 3 086 368

## Beschreibung

Die Erfindung betrifft eine Beleuchtungsvorrichtung für den Innenraum eines Kraftfahrzeugs mit den Merkmalen vom Oberbegriff des Patentanspruchs 1.

Eine derartige Beleuchtungsvorrichtung ist beispielsweise aus der DE 10 2017 124 311 A1 bekannt geworden. Konkret weist die dort offenbarte Beleuchtungsvorrichtung einen ersten, plattenförmigen Lichtleiter mit einer an einer ersten Flachseite ausgebildeten Lichtauskopplungsfläche auf. Ferner sind mehrere Lichtquellen zur Lichteinkopplung in eine randseitige Fläche des ersten Lichtleiters vorhanden. Mehrere bandartig ausgebildete Lichtleiter stehen mit ihrer Flächenerstreckung in etwa senkrecht von einer Rückseite des plattenförmigen Lichtleiters ab. In eine freie Unterseite der bandartigen Lichtleiter ist jeweils das Licht eines LED-Leuchtbandes einkoppelbar. Das in die bandartigen Lichtleiter eingekoppelte Licht ist über Lichtauskoppelflächen in eine Rückseite des plattenförmigen Lichtleiters einkoppelbar. Somit ist insgesamt ein Lichtabstrahlmuster erzeugbar, welches sich aus einem ersten, durch den plattenförmigen Lichtleiter erzeugten Anteil und einen zweiten, durch die bandartigen Lichtleiter erzeugten Anteil zusammensetzt.

Aus der DE 10 2018 103 659 A1 ist ebenfalls eine Beleuchtungsvorrichtung mit den Merkmalen vom Oberbegriff des Patentanspruchs 1 bekannt geworden. Die Beleuchtungsvorrichtung weist ein erstes Gehäuseteil aus einem ersten Kunststoff und ein zweites Gehäuseteil aus einem zweiten Kunststoff auf, die zusammen einen Aufnahmeraum mit einer schlitzartigen Lichtauslassöffnung ausbilden. In dem Aufnahmeraum sind ein Lichterzeugungsmodul mit mehreren Lichtquellen und ein Lichtleiter untergebracht, der zum Leiten des von den Lichtquellen abstrahlbaren Lichts zur Lichtauslassöffnung eingerichtet ist. Der Lichtleiter ist ein Zweikomponenten-Lichtleiter mit einem ersten, transparenten Lichtleitabschnitt und einem dem ersten Lichtleitabschnitt optisch nachgeschalteten zweiten, diffusen Lichtleitabschnitt. Das Lichterzeugungsmodul weist ein Leuchtband mit mehreren in Reihe angeordneten, als Leuchtdioden ausgebildeten Lichtquellen auf.

Schließlich wird in der WO2018/149741 A1 eine Beleuchtungsvorrichtung für ein Innenausstattungsteil beschrieben. Die Beleuchtungsvorrichtung umfasst eine Lichtleiterleiste, die eine sich entlang einer Längserstreckungsrichtung erstreckende Lichteintrittsfläche aufweist. An der Lichtleiterleiste ist eine Lichtquellenleiste mit einer Vielzahl von punktförmigen Lichtquellen angeordnet, die in Reihe entlang der Lichteintrittsfläche angeordnet sind. Ferner ist ein Abdeckelement vorhanden, das sich entlang der Längserstreckungsrichtung der Lichtleiterleiste erstreckt und zumindest eine Seitenfläche der Lichtleiterleiste, die sich von der Lichteintrittsfläche unterscheidet, abschirmt. Das Abdeckelement ist über ein erstes Befestigungselement und die Lichtquellenleiste über ein zweites Befestigungselement mit der Lichtleiterleiste verbunden, wobei die Lichtquellenleiste zwischen dem Abdeckelement und der Lichtleiterleiste eingehaust ist.

Aus der EP 3 663 641 A1 ist eine Beleuchtungsvorrichtung für den Automobilbereich bekannt, welche mindestens zwei LED-Lichtquellen aufweist, die mehreren Lichtleitern zugewandt sind. Weiterhin sind die Lichtleiter geeignet, das Licht der LED-Lichtquellen durch mindestens zwei unterschiedliche Beleuchtungsflächen an eine Vorderwand der Beleuchtungsvorrichtung zu übertragen und zu emittieren. Die Lichtleiter sind an mindestens einer jeweiligen Innenwand nebeneinander und aneinander angrenzend angeordnet. Weiterhin sind die Lichtleiter mechanisch und optisch durch Sperrelemente getrennt, die den Durchgang von Licht zwischen den Lichtleitern an der mindestens einen Innenwand verhindern, wobei die Sperrelemente lichtundurchlässige Trennwände sind, die sich von der Rückwand bis mindestens zur Vorderwand erstrecken und diese vollständig durchqueren.

Aus der FR 3 056 537 A1 ist ein Fahrassistenzsystem bekannt, welches mindestens eine Einheit zur Erfassung mindestens eines Hindernisses umfasst, das sich vor oder hinter dem Fahrzeug befindet, und mindestens eine Verarbeitungseinheit, die so konfiguriert ist, dass sie mindestens einen Abstand berechnet, der das Fahrzeug von dem Hindernis trennt. Es umfasst auch mindestens ein Beleuchtungsmodul, das konfiguriert ist, um ein Lichtsignal zu erzeugen, welches charakteristisch für den Abstand zu dem Hindernis ist.

Aus der FR 3 086 368 A1 ist eine Beleuchtungsvorrichtung bekannt, welche eine Lichtquelle und einen Lichtleiter umfasst, der in einem ersten Bereich das Licht der Lichtquelle aufnimmt, um dieses zu einem zweiten Bereich zu leiten. Der Lichtleiter umfasst an einer ausgewählten Stelle eine Querrille, die sich über fast seine gesamte Dicke und über seine gesamte Breite erstreckt, um ihn in zwei benachbarte Teile zu unterteilen. Die Beleuchtungsvorrichtung weist weiterhin eine lichtundurchlässige Platte auf, die ähnliche Abmessungen wie die Abmessungen der Quernut aufweist und entweder in dieser untergebracht ist, um eine Beleuchtung eines Teils des zweiten Bereichs, der zu einem der Teile des Lichtleiters gehört, zu ermöglichen, oder unbenutzt ist, um eine Beleuchtung des gesamten zweiten Bereichs zu ermöglichen.

Des Weiteren ist festzustellen, dass die Beleuchtung des Innenraums von Kraftfahrzeugen in Form sogenannter Ambientebeleuchtungen für den Kunden zunehmend an Bedeutung gewinnt.

Vor diesem Hintergrund liegt der vorliegenden Erfindung die Aufgabe zu Grunde, eine Beleuchtungsvorrichtung für den Innenraum eines Kraftfahrzeugs bereitzustellen, welche die Voraussetzung für eine animierte Ambientebeleuchtung bietet, welche für einen Betrachter gut wahrnehmbar und kompakt aufgebaut ist.

Vorliegende Aufgabe wird durch eine Beleuchtungsvorrichtung mit den Merkmalen von Patentanspruch 1 gelöst. Vorteilhafte Ausbildungen beziehungsweise Weiterbildungen der Erfindung sind den abhängigen Ansprüchen zu entnehmen.

Die Erfindung geht dabei von einer Beleuchtungsvorrichtung für den Innenraum eines Kraftfahrzeugs mit wenigstens einem zumindest überwiegend flachen Lichtleiter aus. In den Lichtleiter ist über wenigstens eine randseitige Lichteinkoppelfläche das Licht wenigstens zweier, nebeneinander angeordneter Lichtquellen einkoppelbar und über wenigstens eine Lichtauskoppelfläche wieder aus dem Lichtleiter auskoppelbar.

Die Erfindung schlägt nun vor, dass der Lichtleiter wenigstens eine in Lichtabstrahlrichtung der Lichtquellen weisende, längliche Materialunterbrechung aufweist, durch die der Lichtleiter quer zur Lichtabstrahlrichtung in mehrere, nebeneinander angeordnete Abstrahlbereiche unterteilt ist.

Durch die obigen Merkmale wird eine Beleuchtungsvorrichtung bereitgestellt, die die Grundvoraussetzung dafür bietet, dass mit dieser ein gut sichtbares, animiertes Lichterscheinungsbild erzeugt werden und zugleich die Beleuchtungsvorrichtung kompakt ausgebildet sein kann.

Unter *Lichtabstrahlrichtung* der Lichtquellen im Sinne der Erfindung soll eine solche Richtung verstanden werden, in der die Lichtstärke der Lichtquelle am höchsten ist. Leuchtdioden haben beispielsweise eine Lichtabstrahlcharakteristik, welche einen Abstrahlwinkel von 180 Grad umfasst, wobei bei 90 Grad ein Maximum in der Lichtstärke erzielt wird, also bei etwa 90 Grad auch die Lichtabstrahlrichtung im Sinne der Erfindung liegt.

Unter einem *flachen* Lichtleiter im Sinne der Erfindung soll ein solcher Lichtleiter verstanden werden, dessen Flächenerstreckung in zumindest zwei senkrecht zueinanderstehenden Flächenrichtungen um ein Mehrfaches größer ist als seine Dicke. Unter einem flachen Lichtleiter im Sinne der Erfindung soll insbesondere eine platten- oder bandartiger Lichtleiter verstanden werden.

Gemäß einer Weiterbildung der Erfindung ist der Lichtleiter in einem Gehäuse aufgenommen und die Lichtauskoppelfläche ist durch ein zumindest bereichsweise lichtdurchlässiges Dekorteil abgedeckt. Dabei ragt ein lichtundurchlässiges Element in die wenigstens eine Materialunterbrechung hinein oder durch diese hindurch. Das lichtundurchlässige Element füllt eine Länge der Materialunterbrechung aus oder zumindest nahezu aus. Durch das lichtundurchlässige Element ist eine Wandung gebildet.

Auf diese Weise kann eine leicht montierbare Beleuchtungsvorrichtung bereitgestellt werden, die zusätzlich noch als ein den Innenraum eines Kraftfahrzeugs verzierendes Bauteil dienen kann. Die Beleuchtungsvorrichtung kann beispielsweise in einer Innenverkleidung, beispielsweise in einer Türinnenverkleidung des Kraftfahrzeugs angeordnet sein.

Des Weiteren trägt diese Weiterbildung dazu bei, dass eine noch deutlichere, optische Trennung zwischen den Abstrahlbereichen der Beleuchtungsvorrichtung erzielt werden und dadurch ein animiertes Lichterscheinungsbild noch deutlicher wahrnehmbar gemacht werden kann. Durch das lichtundurchlässige Bauteil wird ein Lichtübertrag von abgestrahltem Licht eines Abstrahlbereiches in einem benachbarten Abstrahlbereich verhindert oder zumindest spürbar erschwert.

Die Lichtdurchlässigkeit des Dekorteils kann auf unterschiedliche Art und Weise erfolgen. Beispielsweise ist es denkbar, dass das Dekorteil zumindest bereichsweise mit Materialdurchbrechungen versehen ist. Die Materialdurchbrechungen können beispielsweise lochartig ausgebildet sein. Es ist aber auch denkbar, dass das Dekorteil durch ein lichtdurchlässiges Material gebildet ist, welches durch das Licht der Lichtquellen durchleuchtbar ist. Es ist auch denkbar, dass das Dekorteil aus einem zumindest bereichsweise lichtdurchlässigen Material besteht, welches auf seiner Sichtseite (im Montagezustand also einem Innenraum eines Kraftfahrzeugs zugewandt) mit einer in eine Richtung lichtdurchlässigen Bedruckung oder Folie versehen ist. Im Tagdesign (bei ausgeschalteten Lichtquellen) bildet die Sichtseite des Dekorteils dann eine farbliche oder gemusterte Oberfläche ab. Im Nachtdesign (bei aktivierten Lichtquellen) hingegen wird die Folie oder Beschichtung des Dekorteils vom Licht der Lichtquellen durchleuchtet und somit ein erzeugtes Lichterscheinungsbild sichtbar.

In einer anderen Weiterbildung der Erfindung wird vorgeschlagen, dass das lichtundurchlässige Element an das Gehäuse angeformt ist. Dies bietet den Vorteil einer vereinfachten Montage sowie eine Reduzierung der Teilevielfalt.

Alternativ ist es auch denkbar, dass das lichtundurchlässige Element an das Dekorteil angeformt ist, wodurch die gleichen Vorteile wie oben erwähnt erreicht werden können.

Um einen Lichtübertrag von abgestrahltem Licht eines Abstrahlbereiches in einem benachbarten Abstrahlbereich wirksam zu verhindern, wird in einer weiteren Ausbildung des Erfindungsgedankens vorgeschlagen, dass im Bereich des lichtundurchlässigen Elementes ein lichter Abstand zwischen dem Lichtleiter und dem Dekorteil überbrückt oder nahezu überbrückt wird. Auf diese Weise wird über jedem Abstrahlbereich eine Art Lichtkammer gebildet, die im Querschnitt der Beleuchtungsvorrichtung betrachtet zu den Seiten durch eine Gehäusewandung und das lichtundurchlässige Element bzw. (bei mehreren lichtundurchlässigen Elementen) durch zwei lichtundurchlässige Elemente begrenzt wird. Nach oben, also in Richtung des Lichtaustritts aus der Beleuchtungsvorrichtung, wird eine Lichtkammer durch das Dekorteil gebildet.

Gemäß der Erfindung sind die Lichtquellen als RGB-Leuchtdioden ausgebildet. Der Lichtleiter ist ein Mehrkomponenten-Bauteil, welches einen ersten, stark lichtstreuenden Bereich und einen zweiten, nicht oder nur schwach lichtstreuenden Bereich aufweist. Dabei ist, in Lichtabstrahlrichtung gesehen, den Lichtquellen zuerst der erste, stark lichtstreuende Bereich und anschließend der zweite, nicht oder nur schwach lichtstreuende Bereich des Lichtleiters nachgeordnet.

Diese Merkmale bieten den Vorteil, dass die mit der Beleuchtungsvorrichtung erreichbaren lichttechnischen Effekte in beliebigen Farben mit einer hohen Homogenität dargestellt werden können. RGB-Leuchtdioden (RGB-LEDs), welche drei einzelne LED-Chips (Rot, Grün und Blau) aufweisen, können durch Farbmischung im RGB-Farbraum beliebige Farben erzeugen. Sie sind dem Fachmann bestens bekannt und brauchen daher hier nicht weiter erläutert zu werden.

Der als Mehrkomponenten-Bauteil ausgebildete Lichtleiter ist vorzugsweise ein aus Kunststoff bestehendes Zweikomponenten-Bauteil. Dabei ist denkbar, dass der stark lichtstreuende Bereich ein milchig-trübes Aussehen aufweist, während der nicht oder nur schwach lichtstreuende Bereich vorzugsweise transparent ausgebildet werden kann.

Die besagte Anordnung führt dazu, dass das von den RGB-Leuchtdioden ausgestrahlte Licht im ersten, stark lichtstreuenden Bereich zunächst stark homogenisiert wird. Der Abstand des zweiten, nicht oder nur schwach lichtstreuenden Bereichs des Lichtleiters zu den RGB-Leuchtdioden kann auf Grund der wirksamen Homogenisierung der abgegebenen Lichtstrahlen durch den ersten, stark lichtstreuenden Bereich des Lichtleiters deutlich kürzer gehalten werden als dies ohne Einsatz des ersten, stark lichtstreuenden Bereichs möglich wäre. Dies gestattet wiederum eine Vergrößerung des zweiten, nicht oder nur schwach lichtstreuenden Bereichs und damit der Größe des Abstrahlbereichs.

Jeder Abstrahlbereich weist entsprechende Auskoppelstrukturen auf, welche beispielsweise als rückseitig in den Lichtleiter eingebrachte Störstellen ausgebildet sein können. Die lichtstreuenden Eigenschaften des ersten, stark lichtstreuenden Bereichs können beispielsweise durch volumenstreuende, in das Material des Lichtleiters eingebrachte Störstellen erzielt werden.

Erfindungsgemäß ist der Lichtleiter länglich ausgebildet, wobei die Lichtquellen zumindest entlang einer Längsseite des Lichtleiters angeordnet sind. Der Lichtleiter kann beispielsweise einen rechteckigen und/oder bandartigen Umriss aufweisen.

Auf diese Weise eignet sich die Beleuchtungsvorrichtung besonders zum Einbau in eine Tür-Innenverkleidung, wobei die Beleuchtungsvorrichtung mit ihrer Längserstreckung vorzugsweise in Längsrichtung des Kraftfahrzeugs ausgerichtet sein kann.

Um noch eine höhere Variabilität in der Erzeugung von animierten Lichterscheinungen zu ermöglichen, ist es zudem denkbar, dass die Lichtquellen an gegenüberliegenden Längsseiten des Lichtleiters angeordnet sind.

Eine andere, mögliche Weiterbildung schlägt zudem vor, dass das lichtundurchlässige Bauteil als zum Gehäuse und zum Dekorteil gesondertes Bauteil ausgebildet und von der Beleuchtungsvorrichtung lösbar zwischen dem Gehäuse und dem Dekorteil angeordnet ist.

Dies erleichtert eine gegebenenfalls erwünschte Anpassung in der Lichtabstrahlcharakteristik der Beleuchtungsvorrichtung.

Zur Unterstützung eines animierten Lichterscheinungsbildes ist es sehr von Vorteil, wenn die Lichtquellen der Beleuchtungsvorrichtung durch eine Steuereinrichtung einzeln ansteuerbar sind oder angesteuert werden.

In diesem Zusammenhang ist es ferner auch denkbar, dass die Steuereinrichtung mit Fahrerassistenzsystem und/oder mit Sensoren eines Kraftfahrzeugs derart verbunden ist, dass mit der Beleuchtungsvorrichtung animierte Lichterscheinungen in Abhängigkeit bestimmter Fahrzustände, Fahrmanöver und/oder anderer erfasster Sensordaten erzeugt werden.

Um beispielsweise besonders gut animierte Lichterscheinungen in Längsrichtung des Kraftfahrzeugs erzeugen zu können, wird vorgeschlagen, dass der Lichtleiter quer zur Lichtabstrahlrichtung der Lichtquellen in eine Vielzahl von Abstrahlbereichen unterteilt ist. So ist beispielsweise denkbar, dass mit der Beleuchtungsvorrichtung ein Lauflicht in oder entgegengesetzt der Fahrtrichtung erzeugt wird. Mit anderen Worten ist der Lichtleiter bei dieser Weiterbildung länglich ausgebildet mit einer Vielzahl von länglichen Materialunterbrechungen, durch die die besagten Abstrahlbereiche ausgebildet werden.

Schließlich soll mit der Erfindung auch ein Kraftfahrzeug unter Schutz gestellt werden, welches wenigstens eine erfindungsgemäße Beleuchtungsvorrichtung aufweist.

Ein solches Kraftfahrzeug kann dadurch weitergebildet sein, dass die Beleuchtungseinrichtung mit wenigstens einer Steuereinrichtung in signaltechnischer Verbindung steht, durch die die Beleuchtungsvorrichtung derart ansteuerbar ist, dass mit ihr animierte Lichterscheinungen erzeugbar sind. Insbesondere können die einzelnen Lichtquellen der Beleuchtungsvorrichtung durch die Steuereinrichtung einzeln angesteuert werden.

Bevorzugte Ausführungsbeispiele der Erfindung sind in den Figuren dargestellt und werden anhand der Figuren in der nachfolgenden Beschreibung näher erläutert. Dadurch werden auch noch weitere Merkmale und Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können. Wird der Begriff "und/oder" in einer Aufzählung aus zwei oder mehr Begriffen bzw. Gegenständen verwendet, so kann dies bedeuten, dass ein beliebiger der aufgezählten Begriffe bzw. Gegenstände allein verwendet werden kann. Es kann auch bedeuten, dass eine beliebige Kombination aus zwei oder mehr der aufgezählten Begriffe bzw. Gegenstände verwendet werden kann.

Es zeigen, jeweils schematisch
- Fig. 1: ein Kraftfahrzeug mit erfindungsgemäßen Beleuchtungsvorrichtungen in den Türinnenverkleidungen,
- Fig. 2: eine Ansicht auf eine Beleuchtungsvorrichtung gemäß Ansicht II aus Fig. 1, zum Teil aufgebrochen und geschnitten,
- Fig. 3: eine Schnittansicht gemäß Schnittverlauf III aus Fig. 2,
- Fig. 4: eine Schnittansicht gemäß Schnittverlauf IV aus Fig. 2,
- Fig. 5: eine Beleuchtungsvorrichtung gemäß einem zweiten Ausführungsbeispiel,
- Fig. 6: eine Schnittansicht gemäß Schnittverlauf VI aus Fig. 5,
- Fig. 7: eine Beleuchtungsvorrichtung gemäß einem weiteren Ausführungsbeispiel,
- Fig. 8: eine Schnittansicht gemäß Schnittverlauf VIII aus Fig. 7,
- Fig. 9: eine Schnittansicht gemäß Schnittverlauf IX aus Fig. 7,
- Fig. 10: eine Darstellung eines noch weiteren Ausführungsbeispiels der Beleuchtungsvorrichtung und
- Fig. 11: ein Signalschaubild zur Erläuterung einer denkbaren Arbeitsweise der Beleuchtungsvorrichtung.

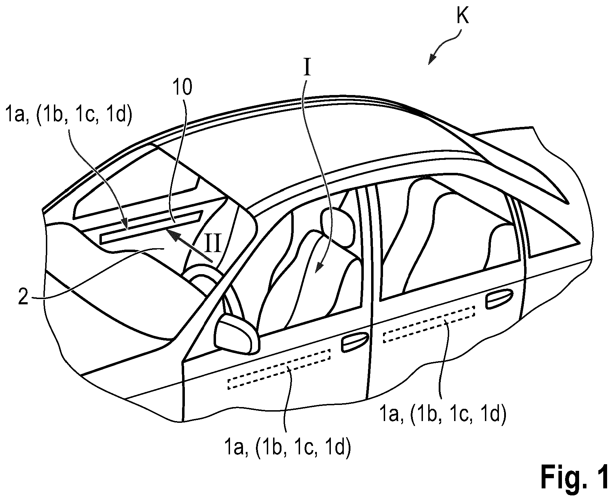

Es wird zunächst auf die Fig. 1 Bezug genommen. Darin ist ein Kraftfahrzeug K mit einem Innenraum I ersichtlich. Der Innenraum I ist mit Tür-Innenverkleidungen 2 ausgestattet. In den Tür-Innenverkleidungen 2 sind wiederum Beleuchtungsvorrichtungen 1a eingebettet.

Die Beleuchtungsvorrichtungen 1a sind im Umriss vorzugsweise länglich, besonders bevorzugt band- oder streifenartig ausgebildet. Der Umriss kann jedoch auch andere Formen aufweisen.

Anstatt der Beleuchtungsvorrichtungen 1a ist es auch denkbar, dass in den Tür-Innenverkleidungen 2 Beleuchtungsvorrichtungen 1b, 1c oder 1d eingebettet sind.

Die Beleuchtungsvorrichtungen 1a bis 1d werden später anhand nachfolgender Figuren im Detail erläutert.

Die Beleuchtungsvorrichtungen 1a bis 1d weisen ein Dekorteil 10 auf, welches dem Innenraum I des Kraftfahrzeugs K zugewandt und daher sichtbar ist.

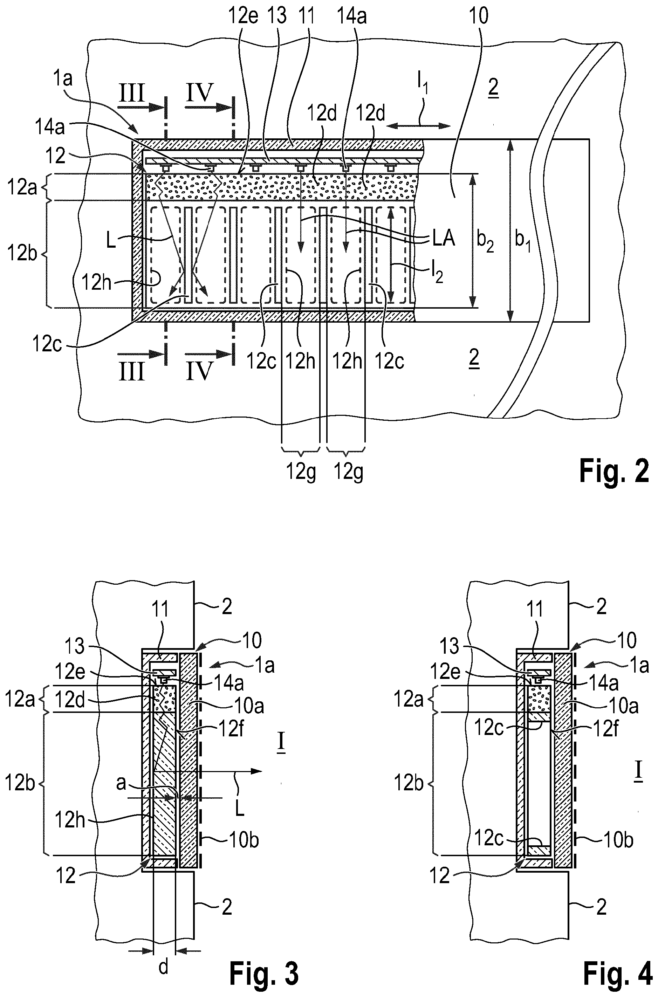

In den Fig. 2 bis 4 ist nun die Beleuchtungsvorrichtung 1a im Detail dargestellt. Hierbei ist gut zu erkennen, dass die Beleuchtungsvorrichtung 1a im Umriss ein band- oder streifenartiges Aussehen aufweist. Die Beleuchtungsvorrichtung 1a weist Längsseiten mit einer Längserstreckung I1 und Schmalseiten mit einer Breite b1 auf. Die Beleuchtungsvorrichtung 1a wird ferner durch ein Gehäuse 11 gebildet, welches zur Sichtseite, also zum Innenraum I hin, durch das Dekorteil 10 abgedeckt ist. Das Gehäuse 11 ist vorzugsweise aus einem lichtundurchlässigen Material ausgebildet.

Im Gehäuse 11 ist ein Lichtleiter 12 aufgenommen. Der Lichtleiter 12 weist im Umriss ebenfalls vorzugsweise ein band- oder streifenartiges Aussehen auf, mit zwei Längsseiten und zwei Schmalseiten. Die Längsseiten weisen eine Längserstreckung auf, die nur geringfügig kleiner ist als die bereits erwähnte Längserstreckung I1 ist. Der Lichtleiter 12 erstreckt sich vorzugsweise über die gesamte Länge des Gehäuses 11.

Im Umriss gesehen weist der Lichtleiter 12 eine Breite b2 auf. Die Breite b2 ist derart gewählt, dass das Gehäuse 11 noch Platz zur Aufnahme einer Platine 13 ist, auf der eine Vielzahl von Lichtquellen 14a angeordnet ist.

Die Platine 13 ist bandartig angeordnet und erstreckt sich in etwa über die gesamte Länge des Lichtleiters 12. Dabei sind die Lichtquellen 14a in gleichmäßigen Abständen nebeneinander auf der Platine 13 angeordnet.

Die Platine 13 mit den Lichtquellen 14a erstreckt sich entlang einer Längsseite des Lichtleiters 12, welche somit als randseitige Lichteinkoppelfläche 12e dient.

Die Lichtquellen 14a sind im vorliegenden Ausführungsbeispiel vorzugsweise als Leuchtdioden, besonders bevorzugt als RGB-Leuchtdioden ausgebildet. RGB-Leuchtdioden können im sogenannten RGB-Farbraum durch Farbmischung Licht beliebiger Farben aussenden.

Des Weiteren ist dargestellt, dass der Lichtleiter 12 einen ersten Bereich 12a und einen zweiten Bereich 12b aufweist.

Der erste Bereich 12a ist ein stark lichtstreuender Bereich. Die lichtstreuenden Eigenschaften dieses Bereichs werden bevorzugt durch volumenstreuende Störstellen 12d ermöglicht, welche in den ersten Bereich 12a eingebracht sind.

Von den Lichtquellen 14a ausgesendete Lichtstrahlen L, von denen beispielhaft nur zwei dargestellt sind, gelangen also zunächst in den ersten Bereich 12a. Dort werden die Lichtstrahlen stark gestreut. Es kommt im ersten Bereich 12a also zu einer starken Vermischung der ausgesendeten Lichtstrahlen L, so dass im ersten Bereich 12a eine wirksame Homogenisierung des Lichtes stattfindet.

Anschließend gelangen die Lichtstrahlen L in den zweiten Bereich 12b. Der zweite Bereich 12b des Lichtleiters 12 ist nicht oder nur schwach lichtstreuend ausgebildet. Er kann vorzugsweise transparent ausgebildet sein. Dabei ist zu erwähnen, dass der Lichtleiter 12 vorzugsweise aus Kunststoff, beispielsweise aus Polymethylmethacrylat (PMMA) oder Polycarbonat (PC) ist.

Ferner ist erkennbar, dass im zweiten Bereich 12b quer, insbesondere senkrecht zu einer Lichtabstrahlrichtung LA der Lichtquellen 14a, mehrere Lichtauskoppelstrukturen 12h angeordnet sind. In einer Draufsicht auf den Umriss des Lichtleiters 12 weisen die Lichtauskoppelstrukturen 12h einen in etwa rechteckartigen Umriss auf. Die Lichtauskoppelstrukturen 12h können beispielsweise durch eine rückseitige, lichtstreuende und/oder reflektierende Beschichtung des Lichtleiters 12 erzeugt werden. Es ist auch denkbar, dass die Lichtauskoppelstrukturen 12h beim Herstellprozess als aufgeraute, mattierte Oberfläche erzeugt werden.

In einer Draufsicht auf den Umriss des Lichtleiters 12 erstreckt sich der erste, hochreflektierende Bereich 12a über die gesamte oder nahezu gesamte Länge des Lichtleiters 12. Ebenso erstrecken sich die Lichtauskoppelstrukturen 12h, nebeneinander angereiht, über die gesamte oder nahezu gesamte Länge des Lichtleiters 12. Zwei benachbarte Lichtauskoppelstrukturen 12h werden lediglich durch eine Materialunterbrechung 12c voneinander getrennt. Die Materialunterbrechungen 12c sind länglich ausgebildet und weisen eine Länge auf, die vorzugsweise einer Länge l2 der Lichtauskoppelstrukturen 12h in etwa entspricht. Die Materialunterbrechungen 12c sind vorzugsweise schlitzartig ausgebildet.

Sie bilden einen wichtigen Bestandteil der vorliegenden Erfindung. Auch sie werden beim Herstellprozess, vorzugsweise beim Spritzgießprozess des Lichtleiters 12 in diesen gleich mit eingebracht.

Der Lichtleiter 12 ist also ein Mehrkomponentenbauteil, vorzugsweise ein Zweikomponenten-Bauteil, welches aus dem ersten, stark lichtstreuenden Bereich 12a und dem zweiten, nicht oder nur schwach lichtstreuenden Bereich 12b besteht. Die Bereiche 12a und 12b sind herstellbedingt also einstückig (stoffschlüssig) miteinander verbunden.

Die Lichtauskoppelstrukturen 12h dienen zur Umlenkung eingekoppelter Lichtstrahlen L in Richtung einer Lichtauskoppelfläche 12f, aus der die Lichtstrahlen L dann in Richtung des Innenraums I ausgekoppelt werden. Dabei treten die Lichtstrahlen L durch das lichtdurchlässig ausgebildete Dekorteil 10 hindurch.

Im Ausführungsbeispiel ist die Lichtdurchlässigkeit des Dekorteils 10 durch einen lichtdurchlässigen Grundkörper 10a (beispielsweise Kunststoff, vorzugsweise transparent) gebildet, welcher durch eine ebenso lichtdurchlässige Bedruckung 10b überdeckt ist. Die Bedruckung 10b ist vorzugsweise nur in einer Richtung, das heißt in Richtung der aus der Beleuchtungsvorrichtung 1a austretenden Lichtstrahlen L lichtdurchlässig.

Der Lichtleiter 12 weist eine Dicke d auf, welche kleiner als eine Dicke des Gehäuses 11 ist. So entsteht ein geringfügiger Abstand a zwischen dem Lichtleiter 12 und dem Dekorteil 10 (vergleiche auch Fig. 3). Der Abstand a führt zu einer Erhöhung der Homogenität der Lichtabstrahlung der Beleuchtungsvorrichtung 1a.

Es wird auf die Materialunterbrechungen 12c zurückgekommen. Diese bilden innerhalb des zweiten Bereichs 12b des Lichtleiters 12 Grenzflächen (Lichtleitermaterial/Luft) aus, an denen eine Totalreflexion der in den zweiten Bereich 12b gelangenden Lichtstrahlen L erfolgen kann. Dies ist beispielhaft an der ersten, linken Materialunterbrechung 12c dargestellt. Wie ersichtlich ist, sind die Materialunterbrechungen 12c parallel zueinander ausgerichtet. Des Weiteren verlaufen die Materialunterbrechungen 12c parallel zur Lichtabstrahlrichtung LA der Lichtquellen 14a.

Auf diese Weise wird zwischen zwei nebeneinander angeordneten Materialunterbrechungen 12c oder zwischen einer Materialunterbrechung 12c und dem Gehäuse 11 jeweils ein Abstrahlbereich 12g ausgebildet.

Die Materialunterbrechungen 12c verhindern oder erschweren zumindest einen Lichtaustausch zwischen den Abstrahlbereichen 12g. Mit anderen Worten ermöglichen die Materialunterbrechungen 12c die Schaffung klar definierter Abstrahlbereiche 12g im Lichtleiter 12. Jeder Lichtquelle 14a ist genau ein Abstrahlbereich 12g zugeordnet. Mit anderen Worten ist, in Lichtabstrahlrichtung LA einer Lichtquelle 14a gesehen, der Lichtquelle 14a genau ein Abstrahlbereich 12g nachgeordnet.

Eine solche klare Definition von Abstrahlbereichen 12g ist dann von großem Vorteil, wenn die Lichtquellen 14a einzeln ansteuerbar sind, beziehungsweise angesteuert werden. So kann, je nach Ansteuerung einer Lichtquelle 14a vornehmlich nur der Abstrahlbereich 12g aufleuchten, welcher jeweils nur einer der Lichtquellen 14a zugeordnet ist.

In diesem Zusammenhang ist zu erwähnen, dass der erste, stark lichtstreuende Bereich 12a in erster Linie dazu dient, die von einer Lichtquelle 14a ausgesendeten Licht-Farbkomponenten (Rot, Grün, Blau) ausreichend zu vermischen, so dass eine gewünschte Farbe im ersten Bereich 12a homogen erzeugt und im zweiten Bereich 12b anschließend ausgekoppelt werden kann.

Auf diese Weise kann mit der Beleuchtungsvorrichtung 1a beispielsweise ein gut ersichtliches, in Längserstreckung l1 gerichtetes Lauflicht erzeugt werden, bei dem die Abstrahlbereiche 12g sequenziell nacheinander aufleuchten.

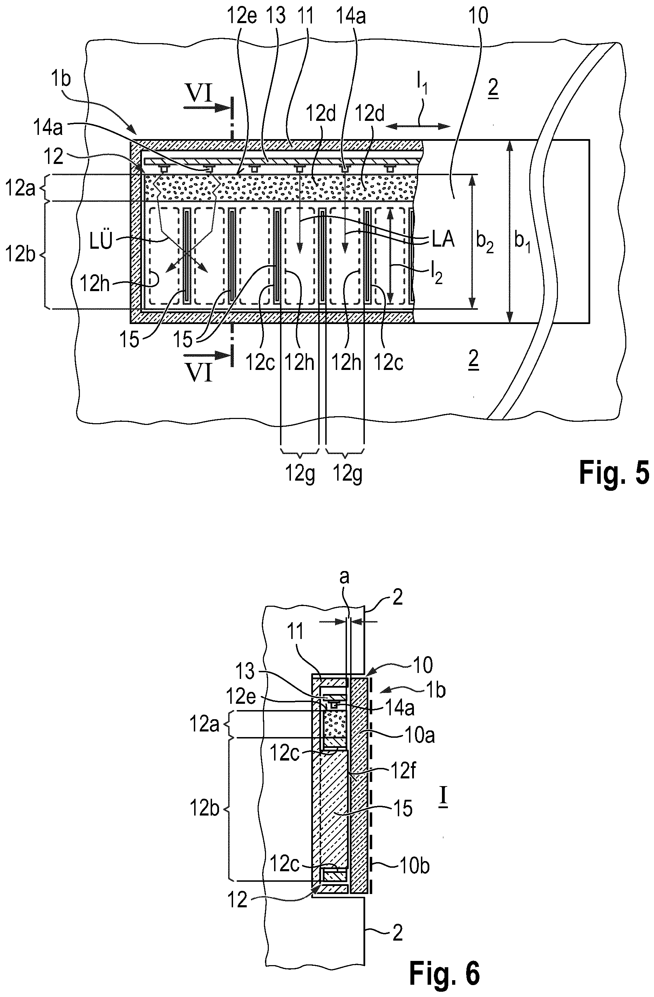

Anhand der Fig. 5 und 6 soll nun ein zweites Ausführungsbeispiel einer Beleuchtungsvorrichtung 1b näher erläutert werden. Die Beleuchtungsvorrichtung 1b unterscheidet sich von dem vorherigen Ausführungsbeispiel dahingehend, dass zusätzlich jeweils ein lichtundurchlässiges Element 15 durch die Materialunterbrechungen 12c hindurch- oder in diese hineinragt. Jedes lichtundurchlässige Element 15 füllt dabei eine Länge der Materialunterbrechung 12c zumindest im Wesentlichen aus. Im Bereich eines lichtundurchlässigen Elementes 15 wird dabei der Abstand a zwischen dem Lichtleiter 12 und dem Dekorteil 10 überbrückt oder zumindest im Wesentlichen überbrückt.

Auf diese Weise wird über den Abstrahlbereichen 12g jeweils eine Art Lichtkammer gebildet, die in Längserstreckung l1 der Beleuchtungsvorrichtung 1b lichttechnisch derart voneinander getrennt sind, dass ein Lichtübertrag LÜ zwischen den Lichtkammern verhindert oder zumindest nahezu verhindert wird.

Dies kann zu einer noch besseren Sichtbarmachung von animierten Lichterscheinungen führen.

Abweichend von den bereits dargestellten Ausführungsbeispielen ist es denkbar, dass eine erfindungsgemäße Beleuchtungsvorrichtung 1a oder 1b auch mehr oder weniger an Abstrahlbereichen 12g beziehungsweise an Lichtkammern aufweist. Eine Beleuchtungsvorrichtung 1a oder 1b weist jedoch mindestens zwei Abstrahlbereiche 12g auf, die durch eine Materialunterbrechung 12c voneinander getrennt sind.

Aus der Fig. 6 wird deutlich, dass das lichtundurchlässige Element 15 einstückig mit der Rückwand des Gehäuses 11 verbunden, also an diese angeformt ist. Die lichtundurchlässigen Elemente 15 erstrecken sich von der Rückwand des Gehäuses 11 senkrecht nach oben bis hin zum Dekorteil 10. Ein Abstand a zwischen dem Lichtleiter 12 und dem Dekorteil 10 wird dabei also überbrückt oder zumindest im Wesentlichen überbrückt.

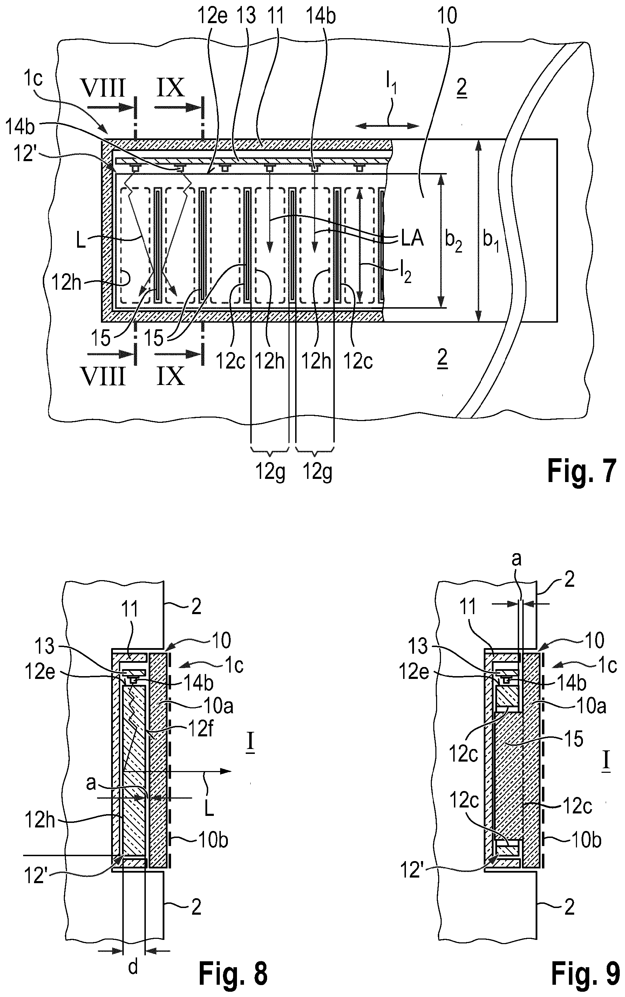

Anhand der Fig. 7 bis 9 wird noch ein weiteres Ausführungsbeispiel einer erfindungsgemäßen Beleuchtungsvorrichtung 1c beschrieben. Im Unterschied zum vorherigen Ausführungsbeispiel weist die Beleuchtungsvorrichtung 1c folgende Unterschiede auf:
Zum einen ist ein Lichtleiter 12' vorhanden, der nur einen nicht oder nur schwach lichtstreuenden Bereich aufweist. Ferner sind in diesem Ausführungsbeispiel Lichtquellen 14b vorhanden, welche monochromes, also einfarbiges Licht aussenden. Die Lichtquellen 14b sind vorzugsweise als Leuchtdioden, besonders bevorzugt als weißes Licht aussende Leuchtdioden ausgebildet. Da von den Lichtquellen 14b kein mehrfarbiges Licht ausgesendet wird, ist die Nachschaltung eines stark streuenden Bereiches (vergleiche Bereich 12a in Fig. 2) nicht erforderlich.

Des Weiteren ist darauf hinzuweisen, dass die lichtundurchlässigen Elemente 15 bei diesem Ausführungsbeispiel einstückig mit dem Dekorteil 10 verbunden sind, von dem sie sich rippenartig in Richtung des Lichtleiters 12' erstrecken und in die Materialunterbrechungen 12c hinein- oder durch diese hindurchragen. In diesem Fall wird ein lichter Abstand a zwischen dem Lichtleiter 12' und dem Dekorteil 10 im Bereich der lichtundurchlässigen Elemente 15 vollständig überbrückt (vergleiche Fig. 9).

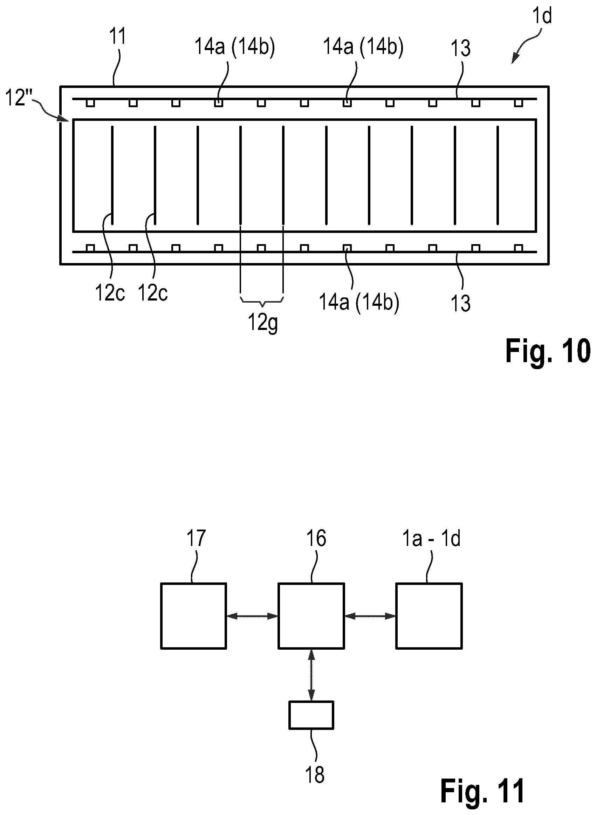

Fig. 10 zeigt eine stark vereinfachte Ansicht auf den Umriss einer noch weiteren Ausführungsform einer Beleuchtungsvorrichtung 1d. Als wesentlicher Unterschied zu den vorausgegangenen Ausführungsbeispielen sind bei der Beleuchtungsvorrichtung 1d an beiden gegenüberliegenden Längsseiten eines Lichtleiters 12" bandartige Platinen 13 mit Lichtquellen 14a oder 14b angeordnet.

Bei Verwendung von Lichtquellen 14a (wie beim ersten Ausführungsbeispiel) ist an jeder Längsseite den Lichtquellen 14a wiederum zunächst ein erster, stark lichtstreuender Bereich (ähnlich wie Bereich 12a in Fig. 2) nachgeschaltet. Der Lichtleiter 12" weist in diesem Fall also zwei randseitig verlaufende, stark streuende Bereiche und einen mittleren, nicht oder nahezu nicht lichtstreuenden Bereich auf (nicht näher dargestellt).

Bei Verwendung von monochromen Lichtquellen 14b hingegen ist der Lichtleiter 12" nur durch einen Bereich mit nicht oder nahezu nicht lichtstreuenden Eigenschaften ausgebildet. Vorzugsweise ist der Lichtleiter 12" dann transparent ausgebildet.

Im Übrigen sind in jedem Fall bei dem Lichtleiter 12" auch Materialunterbrechungen 12c vorhanden (nur als Linie angedeutet), die vergleichbar zu den Materialunterbrechungen 12c der Lichtleiter 12 oder 12' angeordnet und ausgebildet sind. Zwischen den Materialunterbrechungen 12c werden gleichermaßen Abstrahlbereiche 12g ausgebildet.

Die vorhanden Materialunterbrechungen 12d der Beleuchtungsvorrichtung 1d können wiederum vorzugsweise mit lichtundurchlässigen Elementen durchsetzt sein, vergleichbar mit den lichtdurchlässigen Elementen 15 der Beleuchtungsvorrichtungen 1b und 1c.

Schließlich wird anhand der Fig. 11 darauf hingewiesen, dass die erfindungsgemäßen Beleuchtungsvorrichtungen 1a bis 1d mit wenigstens einer Steuereinrichtung 16 signaltechnisch verbunden sein können. Die Steuereinrichtung 16 kann integraler Bestandteil der Beleuchtungsvorrichtung 1a bis 1d sein. Es ist aber auch denkbar, dass die Steuereinrichtung 16 als getrenntes Bauteil im Kraftfahrzeug K verbaut ist.

Die Steuereinrichtung 16 kann signaltechnisch wiederum mit Fahrerassistenzsystemen 17 und/oder mit einer Fahrzeugsensorik 18 verbunden sein, bspw. mit Raddrehzahlsensoren, Brems- und/oder Fahrpedalsensoren, Neigungssensoren, Gierwinkelsensoren und dergleichen.

Auf diese Weise ist es möglich, dass die Beleuchtungseinrichtung 1a bis 1d in Abhängigkeit eines erfassten Fahrzustandes, eines erfassten Fahrmanövers oder dergleichen angesteuert wird. So ist es beispielsweise denkbar, dass bei einer Betätigung des Gaspedals, also bei einem Beschleunigungsvorgang, die Beleuchtungsvorrichtung (1a bis 1d) derart angesteuert wird, dass die Lichtquellen (14a, 14b) nacheinander angesteuert werden und ein Lauflicht entgegen der Fahrtrichtung erzeugt wird. Die Geschwindigkeit des Lauflichts kann dabei in Abhängigkeit der Größe der Beschleunigung verändert werden.

Analog ist die Erzeugung eines entgegen der Fahrtrichtung weisenden Lauflichtes bei Betätigung des Bremspedals, also bei einem Bremsvorgang, denkbar. Auch hierbei kann die Geschwindigkeit des Lauflichtes mit der Größe der Bremsverzögerung variiert werden.

### Bezugszeichenliste

| | | | |
|---|---|---|---|
| 1a-1d | Beleuchtungsvorrichtung | | |
| 2 | Tür-Innenverkleidung | | |
| 10 | Dekorteil | | |
| 10a | lichtdurchlässiger Grundkörper | | |
| 10b | Bedruckung | | |
| 11 | Gehäuse | | |
| 12, 12' | Lichtleiter | | |
| 12a | erster Bereich | | |
| 12b | zweiter Bereich | | |
| 12c | Materialunterbrechung | | |
| 12d | volumenstreuende Störstellen | | |
| 12e | Lichteinkoppelfläche | | |
| 12f | Lichtauskoppelfläche | | |
| 12g | Abstrahlbereiche | | |
| 12h | Lichtauskoppelstruktur | | |
| 13 | Platine | | |
| 14a | Lichtquellen, RGB-Leuchtdioden | | |
| 14b | Lichtquellen, Leuchtdioden | | |
| 15 | lichtundurchlässiges Element | | |
| 16 | Steuereinrichtung | | |
| 17 | Fahrerassistenzsysteme | | |
| 18 | Fahrzeugsensorik | | |
| a | lichter Abstand | I2 | Längserstreckun |
| b1. b2 | Breite | | |
| d | Dicke | | |
| I | Innenraum | | |
| K | Kraftfahrzeug | | |
| LA | Lichtabstrahlrichtung | | |
| LÜ | Lichtübertrag | | |
| L | Lichtstrahlen | | |
| I1 | Längserstreckung | | |

## Patentansprüche

1. Beleuchtungsvorrichtung (1a-1d) für den Innenraum (I) eines Kraftfahrzeugs (K), mit wenigstens einem zumindest überwiegend flachen Lichtleiter (12, 12'), in den über wenigstens eine randseitige Lichteinkoppelfläche (12e) Licht (L) wenigstens zweier nebeneinander angeordneter Lichtquellen (14a, 14b) einkoppelbar und über wenigstens eine Lichtauskoppelfläche (12f) wieder aus dem Lichtleiter (12,12') auskoppelbar ist, wobei der Lichtleiter (12, 12') länglich ausgebildet ist und die Lichtquellen (14a, 14b) zumindest entlang einer Längsseite des Lichtleiters (12, 12') angeordnet sind, **dadurch gekennzeichnet, dass** der Lichtleiter (12, 12') wenigstens eine in Lichtabstrahlrichtung (LA) der Lichtquellen (14a, 14b) weisende, längliche Materialunterbrechung (12c) aufweist, durch die der Lichtleiter (12, 12') quer zur Lichtabstrahlrichtung (LA) in mehrere, nebeneinander angeordnete Abstrahlbereiche (12g) unterteilt ist, wobei die Lichtquellen (14a) als RGB-Leuchtdioden ausgebildet sind und der Lichtleiter (12) als Mehrkomponenten-Bauteil, welches einen ersten, stark lichtstreuenden Bereich (12a) und einen zweiten, nicht oder nur schwach lichtstreuenden Bereich (12b) aufweist, wobei in Lichtabstrahlrichtung (LA) gesehen den Lichtquellen (14a) zuerst der erste, stark lichtstreuende Bereich (12a) und anschließend der zweite, nicht oder nur schwach lichtstreuende Bereich (12b) nachgeordnet ist.

2. Beleuchtungsvorrichtung (1b, 1c, 1d) nach Anspruch 1, **dadurch gekennzeichnet, dass** der Lichtleiter (12, 12') in einem Gehäuse (11) aufgenommen ist und die Lichtauskoppelfläche (12f) durch ein zumindest bereichsweise lichtdurchlässiges Dekorteil (10) abgedeckt ist, wobei ein lichtundurchlässiges Element (15) in die wenigstens eine Materialunterbrechung (12c) hinein- oder durch diese hindurchragt und das lichtundurchlässige Element (15) eine Länge der Materialunterbrechung (12c) zumindest überwiegend ausfüllt, wobei durch das lichtundurchlässige Element (15) eine Wandung gebildet ist.

3. Beleuchtungsvorrichtung (1b) nach Anspruch 2, **dadurch gekennzeichnet, dass** das lichtundurchlässige Element (15) an das Gehäuse (11) angeformt ist.

4. Beleuchtungsvorrichtung (1c) nach Anspruch 2, **dadurch gekennzeichnet, dass** das lichtundurchlässige Element (15) an das Dekorteil (10) angeformt ist.

5. Beleuchtungsvorrichtung (1b, 1c, 1d) nach einem der vorhergehenden Ansprüche 2 - 4, **dadurch gekennzeichnet, dass** im Bereich des lichtundurchlässigen Elementes (15) durch dieses ein lichter Abstand (a) zwischen dem Lichtleiter (12, 12') und dem Dekorteil (10) überbrückt oder nahezu überbrückt wird.

6. Beleuchtungsvorrichtung (1d) nach einem der vorhergehenden Ansprüche, **dadurch gekennzeichnet, dass** die Lichtquellen (14a, 14b) an gegenüberliegenden Längsseiten des Lichtleiters (12, 12') angeordnet sind.

7. Beleuchtungsvorrichtung nach einem der vorhergehenden Ansprüche 2 bis 6, **dadurch gekennzeichnet, dass** das lichtundurchlässige Element als zum Gehäuse (11) und zum Dekorteil (10) gesondertes Bauteil ausgebildet und von der Beleuchtungsvorrichtung lösbar zwischen dem Gehäuse (11) und dem Dekorteil (10) angeordnet ist.

8. Beleuchtungsvorrichtung (1a-1d) nach einem der vorhergehenden Ansprüche, **dadurch gekennzeichnet, dass** die Lichtquellen (14a, 14b) durch eine Steuereinrichtung (16) einzeln ansteuerbar sind.

9. Beleuchtungsvorrichtung (1a-1d) nach einem der vorhergehenden Ansprüche, **dadurch gekennzeichnet, dass** der Lichtleiter (12, 12') quer zur Lichtabstrahlrichtung (LA) der Lichtquellen (14a, 14b) in eine Vielzahl von Abstrahlbereichen (12g) unterteilt ist.

10. Kraftfahrzeug (K), **gekennzeichnet durch** wenigstens eine Beleuchtungsvorrichtung (1a-1d) nach einem der vorhergehenden Ansprüche.

11. Kraftfahrzeug (K) nach Anspruch 10, **dadurch gekennzeichnet, dass** die Beleuchtungseinrichtung (1a-1d) mit wenigstens einer Steuereinrichtung (16) in signaltechnischer Verbindung steht, durch die die Beleuchtungsvorrichtung (1a-1d) derart ansteuerbar ist, dass mit ihr animierte Lichterscheinungen erzeugbar sind.

## Claims

1. Lighting device (1a-1d) for the interior (I) of a motor vehicle (K), comprising at least one at least predominantly flat light guide (12, 12'), into which light (L) from at least two adjacently arranged light sources (14a, 14b) can be coupled via at least one edge-side light in-coupling surface (12e) and can be coupled out of the light guide (12, 12') again via at least one light out-coupling surface (12f), wherein the light guide (12, 12') is elongate and the light sources (14a, 14b) are arranged at least along one longitudinal side of the light guide (12, 12'),
**characterized in that** the light guide (12, 12') comprises at least one elongate material interruption (12c) pointing in the light emission direction (LA) of the light sources (14a, 14b), by means of which interruption the light guide (12, 12') is divided transversely to the light emission direction (LA) into a plurality of adjacently arranged emission regions (12g), wherein the light sources (14a) are designed as RGB light-emitting diodes and the light guide (12) is designed as a multicomponent constituent part which comprises a first, strongly light-scattering region (12a) and a second, non- or only weakly light-scattering region (12b), wherein, when viewed in the light emission direction (LA), the first, strongly light-scattering region (12a) and then the second, non- or only weakly light-scattering region (12b) are arranged downstream of the light sources (14a).

2. Lighting device (1b, 1c, 1d) according to claim 1, **characterized in that** the light guide (12, 12') is accommodated in a housing (11) and the light out-coupling surface (12f) is covered by a decorative part (10) which is translucent at least in regions, wherein an opaque element (15) projects into or through the at least one material interruption (12c) and the opaque element (15) at least predominantly fills a length of the material interruption (12c), wherein a wall is formed by the opaque element (15).

3. Lighting device (1b) according to claim 2, **characterized in that** the opaque element (15) is integrally formed on the housing (11).

4. Lighting device (1c) according to claim 2, **characterized in that** the opaque element (15) is integrally formed on the decorative part (10).

5. Lighting device (1b, 1c, 1d) according to any of the preceding claims 2 - 4, **characterized in that,** in the region of the opaque element (15), a clear distance (a) between the light guide (12, 12') and the decorative part (10) is bridged or almost bridged by said opaque element.

6. Lighting device (1d) according to any of the preceding claims, **characterized in that** the light sources (14a, 14b) are arranged on opposite longitudinal sides of the light guide (12, 12').

7. Lighting device according to any of the preceding claims 2 to 6, **characterized in that** the opaque element is designed as a constituent part which is separate from the housing (11) and the decorative part (10) and is arranged between the housing (11) and the decorative part (10) so as to be detachable from the lighting device.

8. Lighting device (1a-1d) according to any of the preceding claims, **characterized in that** the light sources (14a, 14b) can be individually controlled by a control device (16).

9. Lighting device (1a-1d) according to any of the preceding claims, **characterized in that** the light guide (12, 12') is divided into a plurality of emission regions (12g) transversely to the light emission direction (LA) of the light sources (14a, 14b).

10. Motor vehicle (K), **characterized by** at least one lighting device (1a-1d) according to any of the preceding claims.

11. Motor vehicle (K) according to claim 10, **characterized in that** the lighting device (1a-1d) is in signaling connection with at least one control device (16), by means of which the lighting device (1a-1d) can be controlled in such a way that animated light phenomena can be generated by it.

## Revendications

1. Dispositif d'éclairage (1a-1d) pour l'habitacle (1) d'un véhicule automobile (K), comportant au moins un guide de lumière (12, 12') au moins principalement plat dans lequel de la lumière (L) d'au moins deux sources de lumière (14a, 14b) disposées l'une à côté de l'autre peut être couplée par l'intermédiaire d'au moins une surface de couplage de lumière (12e) côté bord et peut être à nouveau découplée hors du guide de lumière (12, 12') par l'intermédiaire d'au moins une surface de découplage de lumière (12f), dans lequel le guide de lumière (12, 12') est réalisé de forme allongée et les sources de lumière (14a, 14b) sont disposées au moins le long d'un côté longitudinal du guide de lumière (12, 12'), **caractérisé en ce que** le guide de lumière (12, 12') présente au moins une interruption de matériau (12c) allongée dirigée dans la direction d'émission de lumière (LA) des sources de lumière (14a, 14b), interruption de matériau par laquelle le guide de lumière (12, 12') est divisé transversalement à la direction d'émission de lumière (LA) en plusieurs zones d'émission (12g) disposées les unes à côté des autres, dans lequel les sources de lumière (14a) sont réalisées sous forme de diodes électroluminescentes RGB et le guide de lumière (12) sous forme de composant à plusieurs éléments, lequel présente une première zone (12a) diffusant fortement de la lumière et une seconde zone (12b) ne diffusant pas de lumière ou seulement faiblement, dans lequel la première zone (12a) diffusant fortement de la lumière puis la seconde zone (12b) ne diffusant pas de lumière ou seulement faiblement sont disposées en aval des sources de lumière (14a), vues dans la direction d'émission de lumière (LA).

2. Dispositif d'éclairage (1b, 1c, 1d) selon la revendication 1,
**caractérisé en ce que** le guide de lumière (12, 12') est logé dans un boîtier (11) et la surface de découplage de lumière (12f) est recouverte par une pièce décorative (10) transparente à la lumière au moins dans certaines zones, dans lequel un élément opaque (15) pénètre dans l'au moins une interruption de matériau (12c) ou traverse celle-ci et l'élément opaque (15) remplit au moins principalement une longueur de l'interruption de matériau (12c), dans lequel une paroi est formée par l'élément opaque (15).

3. Dispositif d'éclairage (1b) selon la revendication 2,
**caractérisé en ce que** l'élément opaque (15) est moulé sur le boîtier (11).

4. Dispositif d'éclairage (1c) selon la revendication 2, **caractérisé en ce que** l'élément opaque (15) est moulé sur la pièce décorative (10).

5. Dispositif d'éclairage (1b, 1c, 1d) selon l'une des revendications précédentes 2 à 4, **caractérisé en ce que,** dans la zone de l'élément opaque (15), un espacement lumineux (a) entre le guide de lumière (12, 12') et la pièce décorative (10) est recouvert ou presque recouvert par ledit élément opaque.

6. Dispositif d'éclairage (1d) selon l'une des revendications précédentes, **caractérisé en ce que** les sources de lumière (14a, 14b) sont disposées sur des côtés longitudinaux opposés du guide de lumière (12, 12').

7. Dispositif d'éclairage selon l'une des revendications précédentes 2 à 6, **caractérisé en ce que** l'élément opaque est réalisé sous forme de composant séparé du boîtier (11) et de la pièce décorative (10) et est disposé de manière amovible par le dispositif d'éclairage entre le boîtier (11) et la pièce décorative (10).

8. Dispositif d'éclairage (1a-1d) selon l'une des revendications précédentes, **caractérisé en ce que** les sources de lumière (14a, 14b) peuvent être commandées individuellement par un appareil de commande (16).

9. Dispositif d'éclairage (1a-1d) selon l'une des revendications précédentes, **caractérisé en ce que** le guide de lumière (12, 12') est divisé transversalement à la direction d'émission de lumière (LA) des sources de lumière (14a, 14b) en une pluralité de zones d'émission (12g).

10. Véhicule automobile (K) **caractérisé par** au moins un dispositif d'éclairage (1a-1d) selon l'une des revendications précédentes.

11. Véhicule automobile (K) selon la revendication 10,
**caractérisé en ce que** le dispositif d'éclairage (1a-1d) est connecté par une technique de transmission de signaux à au moins un appareil de commande (16) par lequel le dispositif d'éclairage (1a-1d) peut être commandé de telle sorte qu'il puisse générer des phénomènes lumineux animés.
